# EUROPEAN PATENT APPLICATION

(11) **EP 4 210 231 A1**
(43) Date of publication of application: **12.07.2023**
(21) Application number: 21890959.6
(22) Date of filing: 26.10.2021
(51) Int. Cl.: H04B 1/40, H04B 1/401

(54) **RADIO FREQUENCY SYSTEM AND CUSTOMER PREMISE EQUIPMENT**

(30) Priority: 12.11.2020 CN 202022620093 U
(71) Applicant: GUANGDONG OPPO MOBILE TELECOMMUNICATIONS CORP., LTD., Dongguan, Guangdong 523860 (CN)
(72) Inventor: ZHOU, Lei, Dongguan, Guangdong 523860 (CN)
(74) Representative: Ipside
(86) International application number: PCT/CN2021/126400
(87) International publication number: WO 2022/100432

(57) **Abstract**

A radio frequency PA Mid device, a radio frequency system comprising: an antenna group (140), which comprises at least one transmission antenna and at least one receiving antenna; a radio frequency transceiving module (120), which is configured with an antenna port and is for supporting the amplification of a radio frequency signal; a switch circuit (130), a first end of the switch circuit (130) being connected to the antenna port, a plurality of second ends of the switch circuit (130) being connected in one-to-one correspondence with the transmission antennas and the receiving antennas, and the circuit being used for selecting and connecting a transmission path in which the transmission antenna is located and a receiving path in which the receiving antenna is located; and a radio frequency transceiver (110), which is connected to the radio frequency transceiving module (120).

## Description

### CROSS REFERENCE TO RELATED APPLICATIONS

The present disclosure claims priority of Chinese patent application No. 202022620093.1, filed on November 12, 2020, titled "RADIO FREQUENCY SYSTEM AND CUSTOMER PREMISE EQUIPMENT", and the contents of which are incorporated herein by its entireties.

### TECHNICAL FIELD

The present disclosure relates to the field of radio frequency communication, and in particular to a radio frequency system and a customer premise equipment.

### BACKGROUND

The description herein provides background information only in relation to the present disclosure and does not necessarily constitute prior art of the present disclosure.

With development of Internet business, user's requirements for network quality of broadband Internet access become higher and higher. However, in order to ensure network quality, a Customer Premise Equipment (CPE) can be set in a rural area, a town, a hospital, a unit, a factory, a cell and other areas.

An antenna design of a traditional CPE continues to evolve in a direction of multi-polarization and high gain. However, a gain of a transmitting antenna is clearly limited due to restrictions of regional laws and regulations. At the same time, since the CPE uses the same antenna for both transmission and reception, an antenna index is fixed. In order to meet requirements of an upper limit of equivalent omnidirectional radiated power (EIRP) for transmitting antennas made by regional regulations, performance of the transmitting antenna must be reduced, which also means that performance of a receiving path may be decreased accordingly.

### SUMMARY OF THE DISCLOSURE

The present disclosure provides a radio frequency system and a customer premise equipment.

A radio frequency system including: an antenna set, including a transmitting antenna and a receiving antenna; a RF transceiver module, configured with an antenna port and configured to support amplification processing of radio frequency signals; a switch circuit, having a first end connected to the antenna port and a plurality of second ends connected to the transmitting antenna and the receiving antenna in one-to-one correspondence, and being configured to selectively conduct a transmitting path in which the transmitting antenna is located and a receiving path in which the receiving antenna is located; and a RF transceiver, connected to the RF transceiver module.

A customer premise equipment includes the radio frequency system as described in the above.

Details of one or more embodiments of the present disclosure are described in the accompanying drawings and description. Other features, objects and advantages of the present disclosure will be apparent based on the specification, the accompanying drawings and the claims.

### BRIEF DESCRIPTION OF THE DRAWINGS

In order to illustrate more clearly the technical solutions in the embodiments or the related art of the present disclosure, the accompanying drawings used for the description of the embodiments or the related art will be described in brief in the following. Apparently, the drawings in the following description are only some of the embodiments of the present disclosure, and other drawings may be obtained by any ordinary skilled person in the art based on these drawings without any creative work.
FIG. 1 is a structural diagram of a radio frequency system according to an embodiment of the present disclosure.
FIG. 2 is a structural diagram of a radio frequency system according to another embodiment of the present disclosure.
FIG. 3 is another structural diagram of a radio frequency system according to an embodiment of the present disclosure.
FIG. 4 is yet another structural diagram of a radio frequency system according to an embodiment of the present disclosure.
FIG. 5 is yet another structural diagram of a radio frequency system according to an embodiment of the present disclosure.
FIG. 6 is yet another structural diagram of a radio frequency system according to an embodiment of the present disclosure.
FIG. 7 is a circuit structural diagram of a T-type attenuation network according to an embodiment of the present disclosure.
FIG. 8 is a circuit structural diagram of a π-type attenuation network according to an embodiment of the present disclosure.
FIG. 9 is a structural diagram of a customer premise equipment according to an embodiment of the present disclosure.

List of reference numbers in drawings:
radio frequency (RF) transceiver 110; RF transceiver module 120; switch circuit 130; antenna group 140; transmitting antenna B 1; receiving antenna A1; antenna port ANT; time division duplex switch 131; first switch 132; second switch 133; third switch 134; receiving circuit 150; first receiving circuit 150-1; second receiving circuit 150-2; third receiving circuit 150-3; receiving module 151; fourth switch 152; attenuation network 160; memory 20; processor 30; baseband processor 101.

### DETAILED DESCRIPTION

In order to make the purpose, technical solutions and advantages of the present disclosure clearer and more understandable, the application is described in further detail below by referring to the accompanying drawings and embodiments. It shall be understood that specific embodiments described herein are intended to explain the present disclosure only and are not intended to limit the present disclosure.

It shall be understood that terms "first", "second", and so on, in the present disclosure are used herein to describe various elements, but the elements are not limited by the terms. The terms are used only to distinguish one element from another element. For example, without departing from the scope of the present disclosure, a first switch 132 may be named as a second switch 133, and similarly, the second switch 133 may be named as the first switch 132. Both the first switch 132 and the second switch 133 are switches, but they are not the same switch.

Furthermore, terms "first" and "second" are used for descriptive purposes only and shall not be understood as indicating or implying relative importance or implicitly specifying the number of technical features indicated. Therefore, a feature defined by the "first" and "second" may explicitly or implicitly include at least one such feature. In the description of the present disclosure, "plurality" means at least two, such as two, three, and so on, unless otherwise expressly and specifically limited.

The present disclosure provides a radio frequency (RF) system. The RF system may be arranged in a customer premise equipment (CPE) to transmit and receive RF signals in a preset frequency band. The customer premise equipment is configured to achieve network access function and convert a public network of an operator WAN into a home local area network LAN of a user. Current Internet broadband access methods may include a fiber optic access (FTTH), a digital telephone line (DSL) access, a cable TV access, a mobile access (Mobile, i.e., wireless CPE). The CPE is a mobile signal access device that receives mobile signals and forwards the mobile signals as wireless Wi-Fi signals. The CPE is also a device that converts high-speed 4G or 5G signals into Wi-Fi signals and can support a plurality of mobile terminals to access one network at the same time.

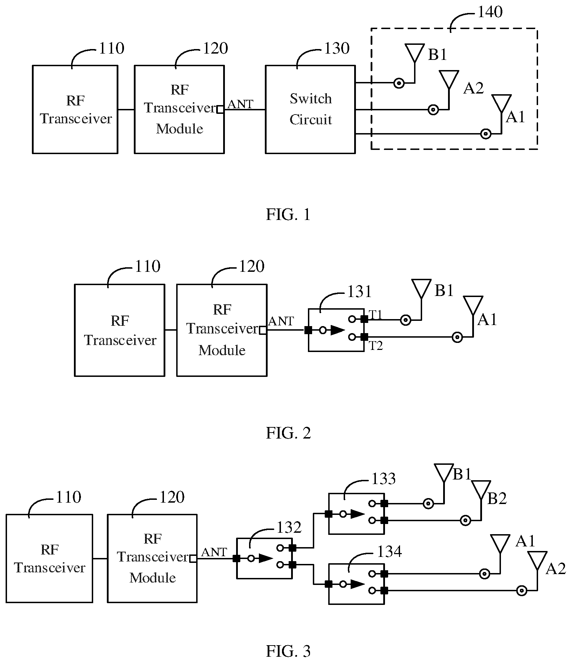

As shown in FIG. 1, in an embodiment, the RF system includes a RF transceiver 110, a RF transceiver module 120, a switch circuit 130, and an antenna set 140. The antenna set 140 includes at least one transmitting antenna (for example, a transmitting antenna B1) and at least one receiving antenna (for example, a receiving antenna A1). A transmitting antenna is configured to transmit RF signals, and a receiving antenna is configured to receive RF signals. The number of receiving antennas may be one or more, and the number of transmitting antennas may be one or more.

The transmitting antenna and the receiving antenna may be formed by using any suitable type of antennas. For example, the transmitting antenna and the receiving antenna may include an antenna having a resonant component formed by the following antenna structure: at least one of an array antenna structure, a circular antenna structure, a patch antenna structure, a slot antenna structure, a spiral antenna structure, a ribbon antenna, a monopole antenna, a dipole antenna, etc. Different types of antennas may be applied in different frequency bands and frequency band combinations, for example, at least including antennas for receiving or transmitting a millimeter wave frequency band, a sub-6GHz frequency band, a 2G frequency band, a 3G frequency band, and a 4G frequency band. Exemplarily, the transmitting antenna which is a millimeter wave antenna configured for transmitting millimeter wave in a frequency band is used as an example. The millimeter wave antenna may include a millimeter wave antenna array, that is, a plurality of radiation patches arranged in an array. The millimeter wave antenna may be a directional antenna, a non-directional antenna, a fixed antenna, or a rotatably adjustable antenna.

The RF transceiver module 120 may be congfigured to perform transmition amplification processing on signals from the RF transceiver 110. The RF transceiver module 120 may also be congfigured to perform reception amplification processing on signals from an antenna. Thus, transceiving communication of long-distance transmission of RF signals is realized. In some embodiments, the RF transceiver module 120 may be understood as a RF front-end module. The RF transceiver module 120 may be configured with an antenna port, and the antenna port ANT is configured to be connected to the switch circuit 130. The RF transceiver module 120 may be a component which is configured to transmit and receive signals in a RF front-end circuit, and may include a power amplifier (PA), a switch, a filter, a combiner, a duplexer, a low noise amplifier (LNA) formed therein. The RF transceiver module 120 may also be a LNA-Power Ampifier Module with integrated Duplexer (L-PAMiD).

The switch circuit 130 is connected to the antenna port ANT, at least one receiving antenna, and at least one transmitting antenna of the RF transceiver module 120, respectively. The switch circuit 130 is configured to selectively conduct a receiving path in which any receiving antenna connected to the switch circuit 130 is located, and a transmitting path in which any transmitting antenna connected to the switch circuit 130 is located. The transmitting path may be understood as a communication link which may realize transmission controlling of the RF signals in the customer premise equipment. Exemplarily, there include the RF transceiver 110, a power amplifier, a filter, the switch circuit 130, and a transmitting antenna on the transmitting path. The receiving path may be understood as a communication link which may realize reception controlling of RF signals in the customer premise equipment. Exemplarily, there may include the RF transceiver 110, a low noise amplifier, a filter, the switching circuit 130, and a receiving antenna on the receiving path. In embodiments of the present disclosure, components arranged on the transmitting path and the receiving path are not further limited.

It should be noted that the number of the receiving antennas is different from that of the transmitting antennas, and thus, there are different corresponding switching circuit 130, which means different switching conduction modes.

Based on the RF system as described above, when signals are received, the RF transceiver module 120 may receive RF signals from a receiving antenna based on the switch circuit 130, and perform low-noise amplification, filtering and other processing on the received RF signals, and then transmit the signals to the RF transceiver 110. The RF transceiver 110 processes the received RF signals to generate a digital baseband signal, and then the digital baseband signal may be transmitted to a baseband processor to restore the RF signals. When signals are transmitted, the RF transceiver 110 may also be configured to receive digital signals from the baseband processor and to convert the digital signals into RF signals which are analog small signals. Then the RF signals are transmitted to the RF transceiver module 120 through the switch circuit 130 to be performed filtering and power amplification, and then to be transmitted to a transmitting antenna. Thus, the RF signals are radiated.

To the greatest extent, the RF system as described above may remain the RF transceiver 110 and RF transceiver module 120 in an original RF system unchanged. The switch circuit 130, a transmitting antenna and a receiving antenna are set to realize decoupling of the transmitting path and the receiving path. This both meets requirements of an upper limit of equivalent isotropically radiated power (EIRP) for transmitting antennas made by regional regulations, and also ensures that a high-performance receiving antenna may be still used as a communication channel in the receiving path.

As shown in FIG. 2, in an embodiment, both the number of transmitting antenna B1 and the number of receiving antenna A1 in the antenna set 140 is one, and the switch circuit 130 includes a time division duplex switch 131. A first end of the time division duplex switch 131 is connected to the antenna port ANT, and two second ends of the time division duplex switch 131 are connected to the transmitting antenna B 1 and the receiving antenna A1, which are configured to conduct the transmitting path and the receiving path in a time-sharing manner. In some embodiments, the time division duplex switch 131 may be a Single Pole Double Throw (SPDT) switch. A single end of the SPDT switch is connected to the antenna port ANT of the RF transceiver module 120, a selection end T1 of the SPDT switch is connected to the transmitting antenna B1, and a selection end T2 of the SPDT switch is connected to the receiving antenna A1. The SPDT switch may also be connected to the RF transceiver 110 to receive a control command from the RF transceiver 110, thereby controlling a conduction state of the SPDT switch. Exemplarily, when the RF system needs to transmit RF signals, the RF transceiver 110 may control the SPDT switch to conduct a path between the single end and the selection terminal T1. When the RF system needs to receive RF signals, the RF transceiver 110 may control the SPDT switch to conduct a path between the single end and the selection terminal T2.

In the RF system according to this embodiment, as few changes of a software and a hardware as possible may be used to remain the RF transceiver 110 and RF transceiver module 120 in an original RF system unchanged to the greatest extent. The time division duplex switch 131, the transmitting antenna B 1 and the receiving antenna A1 are set to realized decoupling of the transmitting path and the receiving path. This both meets requirements of the upper limit of the EIRP for the transmitting antennas made by the regional regulations, and also ensures that a high-performance receiving antenna may be still used as a communication channel in the receiving path. Meanwhile, this may reduce costs, improve utilization of layout space of various components in the RF system, and reduce control complexity of the TDD switch 131.

In an embodiment, an antenna gain of the transmitting antenna is less than that of the receiving antenna. Exemplarily, if the antenna gain of the transmitting antenna is 3dBi, and the antenna gain of the receiving antenna may be 3dBi, 5dBi, 7dBi, 10dBi, or other values greater than 3dBi.

In this embodiment, the gain of the transmitting antenna is different from that of the receiving antenna, and the gain of the transmitting antenna is less than that of the receiving antenna. thus, this may meet requirements of a limit value of transmitting EIRP made by the regional regulations, so as to retain benefits of far coverage under weak signals and large throughput under strong signals to the greatest extent, which are brought by a high gain. At the same time, this may also introduce a transmission signal to a transmitting antenna with low EIRP, so as to meet requirements of the upper limit of the EIRP for the transmitting antennas made by the regional regulations.

As shown in FIG. 3, in an embodiment, the antenna set 140 includes two transmitting antennas B1 and B2, and two receiving antennas A1 and A2. The switch circuit 130 includes a first switch 132, a second switch 133, and a third switch 134. A first end of the first switch 132 is connected to the antenna port ANT, a second end of the first switch 132 is connected to a first end of the second switch 133, and two second ends of the second switch 133 are connected to the two transmitting antennas B1 and B2. Another second end of the first switch 132 is connected to a first end of the third switch 134, and two second ends of the third switch 134 are connected to two receiving antennas A1 and A2.

In some embodiments, the first switch 132, the second switch 133, and the third switch 134 may be SPDT switches. A single end of the SPDT switch may be used as a first end of a respective switch, and selection ends of the SPDT switch may be used as second ends of a respective switch.

In this embodiment, the antenna set 140 includes two receiving antennas and two transmitting antennas. The number of the transmitting antennas and the receiving antennas are expanded, and thus the communication performance of the RF system may be improved. At the same time, the switch circuit 130 is arranged to achieve switching between transmitting antennas and receiving antennas, and thus a technical function of the RF system may be expanded, for example, Antenna Switching Diversity (ASDiV) technology, and to decouple the transmitting path and the receiving path. This both meets the requirements of the upper limit of the EIRP for the transmitting antennas made by the regional regulations, and also ensures that the high-performance receiving antenna may be still used as the communication channel in the receiving path, thereby improving the communication performance of the RF system.

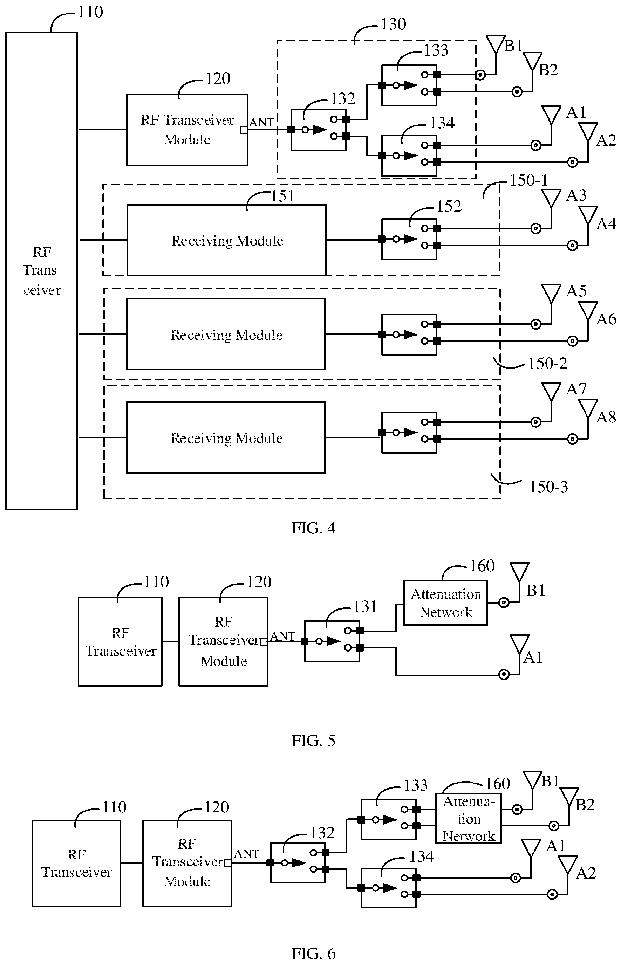

As shown in FIG. 4, in an embodiment, the antenna set 140 further includes two transmitting antennas B1 and B2, and eight receiving antennas A1 to A8. The RF system further includes a RF transceiver module 120, a switch circuit 130, and three receiving circuits 150. The RF transceiver module 120 is connected to the two receiving antennas A1 and A2 and the two transmitting antennas B1 and B2 via the switch circuit 130. Each receiving circuit 150 is connected to two receiving antennas A1 and A2, and configured to support amplification processing of RF signals received by any one of the two receiving antennas. The three receiving circuits 150 may be recorded as a first receiving circuit 150, a second receiving circuit 150 and a third receiving circuit 150. The first receiving circuit 150 is connected to the receiving antennas A3 and A4. The second receiving circuit 150 is connected to the receiving antennas A5 and A6. The third receiving circuit 150 is connected to the receiving antennas A7 and A8.

In an embodiment, the receiving circuit 150 includes a receiving module 151 and a fourth switch 152. A first end of the fourth switch 152 is connected to the receiving module 151, and two second ends of the fourth switch 152 are connected to two receiving antennas A1 and A2 in one-to-one correspondence. The fourth switch 152 may selectively conduct a RF path between any one receiving antenna connected to the fourth switch 152 and a corresponding receiving module 151, and thus a receiving path of each receiving antenna may be conducted. The fourth switch 152 may be a SPDT switch. A single end of the SPDT switch is connected to a corresponding receiving module 151, and two selection ends of the SPDT switch are connected to the two receiving antennas in one-to-one correspondence.

In some embodiments, the receiving module 151 may be a diversity receiver (DRX) component, a low noise amplifier front end module (LFEM) component, and so on, which integrates a low noise amplifier and a filter therein. In this way, integration of the components may be increased, and a space occupied by the entire device may be reduced. In the embodiment of the present disclosure, a specific type of the receiving module 151 is not limited herein.

Based on the RF system as shown in FIG. 4, a 4*4 MIMO technology may be supported by the RF system to achieve receiving antenna assignment, and eventually allowing downlink 4*4 MIMO to have best data transmission performance, thereby improving communication performance of the RF system. In addition, the RF system may also control the switch circuit 130 and the fourth switch 152 to simultaneously conduct receiving paths where any four receiving antennas are located based on a predetermined switching strategy. Every four receiving antennas form a receiving antenna set, and a target receiving antenna set is determined based on network information correspondingly obtained by a plurality of receiving antenna sets. Further, a target transmitting antenna is determined based on a major incoming wave direction of the target receiving antenna set. That is, the RF system may achieve switching between two transmitting antennas based on a current receiving antenna set, so as to select a target transmitting antenna with better performance to directionally transmit RF signals to a base station, thereby improving throughput.

As shown in FIG. 5 and FIG. 6, in an embodiment, the RF system in above embodiments further includes an attenuation network 160. The attenuation network 160 is arranged in the transmitting path to attenuate an antenna gain of the transmitting antenna. That is, the attenuation network 160 is set in the transmitting path and may be configured to adjust the antenna gain of the transmitting antenna (namely, transmission gain). Specifically, the gain attenuation of the transmitting antenna may be achieved without changing the antenna gain of the receiving antenna (namely, reception gain). In some embodiments, the attenuation network 160 may be arranged on a RF path between the switch circuit 130 and a transmitting antenna. For example, the attenuation network 160 may be arranged between the transmitting antenna B 1 and the time division duplex switch 131, or arranged between the two second ends of the second switch 133 and the transmitting antenna B1 and/or the transmitting antenna B2.

It should be noted that, in some embodiments of the present disclosure, where the attenuation network 160 is arranged is not further limited.

The RF system as described above may control the switch circuit 130 to dynamically switch between the transmitting path and the receiving path by means of arranging the attenuation network 160 on the transmitting path. When being switched to the transmitting path, an antenna transmission gain may be attenuated based on the attenuation network 160. When being switched to the receiving path, an antenna reception gain of may keep unchanged, and thus the reception gain may be maximized in the case of meeting the requirements made by the regional regulations, so as to achieve an optimal receiving performance of the RF system.

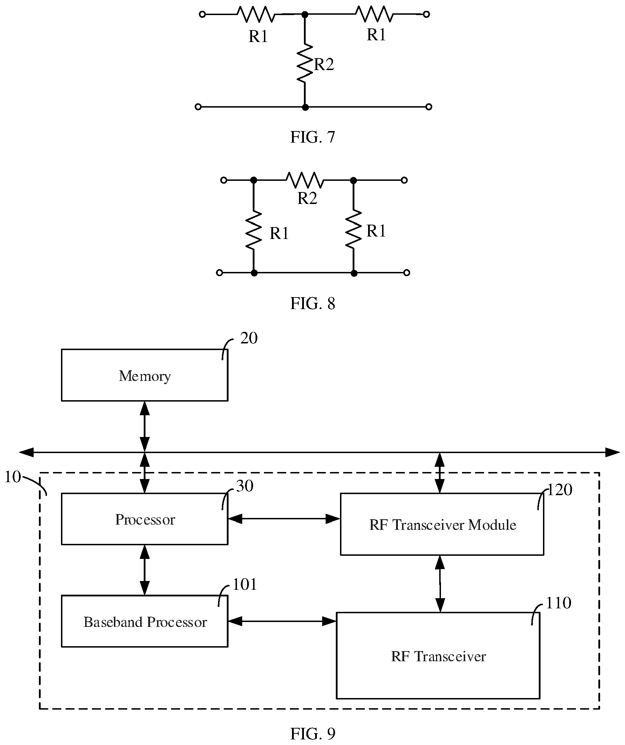

In an embodiment, the attenuation network 160 is a π-type or a T-type attenuation network. As shown in FIG. 7, the T-type attenuation network 160 may be a T-type symmetric attenuation network. In some embodiments, the T-type attenuation network 160 may also be a T-type asymmetric attenuation network. As shown in FIG. 8, the π-type attenuation network is a π-type symmetric attenuation network. In some embodiments, the π-type attenuation network may also be a π-type asymmetric attenuation network.

In some embodiments, the attenuation network 160 may also be a low-noise amplifier with an adjustable gain, a digital attenuator, etc.

It should be noted that, in embodiments of the present disclosure, a specific type of the attenuation network 160 is not further limited. An attenuation multiple N of the attenuation network 160 may be set according to antenna gain requirements of the transmitting antenna in a region where the RF system is located, and the attenuated antenna gain of the transmitting antenna may meet requirements made by the regional regulations of local telecommunications.

As the attenuation network 160 is arranged in the RF system, in a transceiver mode of the RF system, when being switched to the transmitting path, the antenna transmission gain may be attenuated based on the attenuation network 160. When being switched to the receiving path, the antenna reception gain may keep unchanged, and thus the reception gain may be maximized in the case of meeting requirements made by the regional regulations, thereby achieving the optimal receiving performance of the RF system.

In an embodiment, when antenna gains of a transmitting antenna and a receiving antenna in the RF system are arranged asymmetrically, an attenuated gain of the transmitting antenna through the attenuation network 160, and a transmission power generated by the transmitting antenna must meet requirements of the telecommunications specifications made by a region where the customer premise equipment is located. In this way, since the antenna gain of the transmitting antenna and the antenna gain of the receiving antenna are arranged asymmetrically, that is, the antenna gain of the transmitting antenna is different from that of the receiving antenna, even if the attenuation network 160 fails, it may ensure that the antenna gain of the transmitting antenna may meet requirements of the telecommunications specifications made by the region where the customer premise equipment is located.

Embodiments of the present disclosure further provides a customer premise equipment. As shown in FIG. 9, in an embodiment, the customer premise equipment includes a RF system 10 in the above embodiments, a memory 20, a processor 30, and a communication bus. It should be understood by those skilled in the art that a structure of the customer premise equipment as shown in FIG. 9 shall not limit the customer premise equipment. The customer premise equipment may include more or fewer components than that as shown in the drawings, some combined components, or different component arrangements, which is not limited herein.

The RF system may further include a baseband processor 101. The baseband processor 101 may provide network information to the processor 30. The network information may include raw and processed information associated with radio performance of the received RF signals, such as a receiving power, a transmitting power, Reference Signal Receiving Power (RSRP), Reference Signal Receiving Quality (RSRQ), a received signal strength indicator (RSSI), a signal to noise ratio (SNR), a rank of a MIMO channel matrix, a carrier to interference plus noise ratio (RS-CINR), a frame error rate, a bit error rate, channel quality measurement based on signal quality data (such as Ec/lo or c/No data), information about whether a response (answer) is being received from the base station corresponding to a request from a mobile terminal, information about whether a network access process is successful, and so on.

The baseband processor 101 may receive digital data transmitted from the processor 30, and may also transmit corresponding antenna signals by using the radio frequency transceiver 110. The RF transceiver module 120 may be coupled between the RF transceiver 110 and the antenna, and may be used to transmit the RF signal generated by the transmitter to the antenna. The RF transceiver module 120 may include a RF switch, an impedance matching circuit, a filter, and other circuits for forming an interface between the antenna and the RF transceiver 110.

The processor 30 is configured to provide computing and control capabilities to support the operation of the entire customer premise equipment. The processor 30 is a control center of the customer premise equipment. The processor 30 may be a general central processor 30, a microprocessor 30, a specific application integrated circuit, or one or more integrated circuits configured to control the execution of the program in the present disclosure. The processor 30 may analyze the received network information, and in response, the processor 30 (or, the baseband processor 101) may issue a control command configured for controlling the RF system. For example, the processor 30 may send a switch control signal to control a conduction state of the switch circuit 130, so as to select the transmission path where the transmitting antenna is located or the reception path where the reception antenna is located.

The memory 20 may include a nonvolatile storage medium and an internal memory 20. The non-volatile storage media stores an operating system and a computer program. The memory 20 provides a cache running environment for an operating system computer program in the non-volatile storage media. The processor 30 and the memory 20 may transmit information through a communication bus.

Any reference to a memory 20, storage, database or other media used in the present disclosure may include a non-volatile and/or a volatile memory 20. The non-volatile memory 20 may include a read-only memory 20 (ROM), a programmable ROM (PROM), an electrically programmable ROM (EPROM), an electrically erasable programmable ROM (EEPROM) or a flash memory. The volatile memory 20 may include a random access memory (RAM), which is used as an external cache memory. For an illustration and not limitation, the RAM is available in various forms, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a RAM bus (Rambus) direct RAM (RDRAM), a direct memory bus dynamic RAM (DRDRAM), and a memory bus dynamic RAM (RDRAM).

The above embodiments show only some embodiments of the present disclosure, which are described in a more specific and detailed manner, but the description shall not be interpreted as limiting the scope of the present disclosure. To be noted that, any ordinary skilled person in the art may perform various variations and improvements without departing from the conception of the present disclosure. These variations and improvements shall fall within the scope of present disclosure. Therefore, the scope of the patent disclosure shall be governed by the attached claims.

## Claims

1. A radio frequency (RF) system, comprising:
an antenna set, comprising a transmitting antenna and a receiving antenna;
a RF transceiver module, configured with an antenna port and configured to support amplification processing of RF signals;
a switch circuit, having a first end connected to the antenna port and a plurality of second ends connected to the transmitting antenna and the receiving antenna in one-to-one correspondence, and being configured to selectively conduct a transmitting path in which the transmitting antenna is located and a receiving path in which the receiving antenna is located; and
a RF transceiver, connected to the RF transceiver module.

2. The RF system according to claim 1, wherein the switch circuit comprises a time division duplex switch, wherein a first end of the time division duplex switch is connected to the antenna port, and two second ends of the time division duplex switch are connected to the transmitting antenna and the receiving antenna respectively, and the time division duplex switch is configured to conduct the transmitting path and the receiving path in a time-sharing manner.

3. The RF system according to claim 1, wherein the antenna set comprises two transmitting antennas and two receiving antennas; and
the switch circuit comprises a first switch, a second switch, and a third switch, wherein a first end of the first switch is connected to the antenna port, a second end of the first switch is connected to a first end of the second switch, and two second ends of the second switch are connected to the two transmitting antennas; another second end of the first switch is connected to a first end of the third switch, and two second ends of the third switch are connected to the two receiving antennas.

4. The RF according to claim 3, wherein the antenna set further comprises six receiving antennas; and
the RF system further comprises three receiving circuits, wherein each receiving circuit is connected to two receiving antennas and configured to support amplification processing of RF signals received by any one receiving antenna.

5. The RF system according to claim 4, wherein the receiving circuit comprises a receiving module and a fourth switch, a first end of the fourth switch is connected to the receiving module, and two second ends of the fourth switch are connected to two receiving antennas in one-to-one correspondence; and
the receiving module is configured to support amplification and filtering processing of RF signals.

6. The RF system according to claim 5, wherein the receiving module is a diversity receive (DRX) component or a Low noise amplifier front end module (LFEM) component.

7. The RF system according to any one of claims 1-6, further comprising:
an attenuation network, arranged on the transmitting path and configured to attenuate antenna gain of the transmitting antenna.

8. The RF system according to claim 7, wherein the attenuation network comprises a π-type or a T-type attenuation network.

9. The RF system of claim 7, wherein the attenuation network is arranged on a RF path disposed between the switch circuit and the transmitting antenna.

10. The RF system according to claim 1, wherein antenna gain of the transmitting antenna is less than that of the receiving antenna.

11. The RF system according to claim 1, wherein the RF transceiver module is a power amplifier module comprising a low-noise amplifier and a duplexer.

12. A customer premise equipment, comprising:
an antenna set, comprising a transmitting antenna and a receiving antenna;
a radio frequency (RF) transceiver module, configured with an antenna port and configured to support amplification processing of radio frequency signals;
a switch circuit, having a first end of the switch circuit connected to the antenna port and a plurality of second ends of the switch circuit connected to the transmitting antenna and the receiving antenna in one-to-one correspondence, and being configured to selectively conduct a transmitting path in which the transmitting antenna is located and a receiving path in which the receiving antenna is located; and
a RF transceiver, connected to the RF transceiver module.

13. The customer premise equipment according to claim 2, further comprising:
an attenuation network, arranged on a RF path disposed between the switch circuit and configured to attenuate antenna gain of the transmitting antenna.

14. The customer premise equipment according to claim 13, wherein the attenuation network comprises a π-type or a T-type attenuation network.

15. The customer premise equipment according to claim 12, wherein an antenna gain of the transmitting antenna is less than that of the receiving antenna.

16. The customer premise equipment according to claim 12, wherein the antenna set comprises two transmitting antennas and two receiving antennas; and
the switch circuit comprises a first switch, a second switch, and a third switch, wherein a first end of the first switch is connected to the antenna port, a second end of the first switch is connected to a first end of the second switch, and two second ends of the second switch are connected to the two transmitting antennas; the another second end of the first switch is connected to a first end of the third switch, and two second ends of the third switch are connected to the two receiving antennas.

17. The customer premise equipment according to claim 16, wherein the antenna set further comprises another six receiving antennas, and the radio frequency system further comprises three receiving circuits;
wherein each receiving circuit is connected to two receiving antennas and configured to support amplification processing of RF signals received by any one of the receiving antennas.
